# EUROPEAN PATENT SPECIFICATION

(11) **EP 2 637 840 B1**
(45) Date of publication and mention of the grant of the patent: **20.02.2019**
(21) Application number: 11782707.1
(22) Date of filing: 28.10.2011
(51) Int. Cl.: B29C 70/02, B29C 70/48, C08J 3/24, C08J 5/24

(54) **COMPATIBLE CARRIER FOR SECONDARY TOUGHENING**
KOMPATIBLER TRÄGER FÜR SEKUNDÄRES HÄRTEN
SUPPORT COMPATIBLE POUR TREMPE SECONDAIRE

(30) Priority: 09.11.2010 US 411760 P
(43) Date of publication of application: 18.09.2013
(73) Proprietor: Cytec Technology Corp., Wilmington, DE 19801 (US)
(72) Inventor: BAIDAK, Alexandre, A., Saffron Walden CB 113HB (GB); PONSOLLE, Dominique, Winona MN 55987 (US); BLACKBURN, Robert, Hull HU6 7FB (GB); MCGRAIL, Patrick, Terence, North Yorkshire TS13 5LX (GB)
(74) Representative: Vande Gucht, Anne
(86) International application number: PCT/US2011/058264
(87) International publication number: WO 2012/064525

(56) References cited:
- EP-A1- 2 138 522
- EP-A1- 2 366 742
- EP-A2- 0 742 266
- WO-A1-02/16481
- WO-A1-2007/083084
- WO-A1-2008/040963
- WO-A1-2009/138749
- WO-A1-2011/077094
- PEDERSON ET AL: "EPOXY-SOLUBLE THERMOPLASTIC FIBERS: ENABLING TECHNOLOGY FOR MANUFACTURING HIGH TOUGHNESS STRUCTURES BY LIQUID RESIN INFUSION", SAMPE JOURNAL, AZUSA, CA, US, vol. 39, no. 4, 1 July 2003 (2003-07-01), pages 22-28, XP009046156, ISSN: 0091-1062

## Description

### FIELD OF INVENTION

Carriers incorporating modifiers for secondary toughening of resins used in liquid resin infusion applications.

### BACKGROUND OF INVENTION

Highly cross-linked thermosetting resins such as polyesters, epoxies, vinylesters, polyurethanes, phenolics and polyimides are used in many composite manufacturing processes. Although thermosetting resins have high modulus and strength, they are also extremely brittle. That is, the fracture energy of such thermosetting resins is very low. Toughening of these thermosetting resins (i.e., increasing fracture energy) may be accomplished by distributing modifiers (e.g., small, soft rubbery inclusions or thermoplastic polymers) into the brittle matrix. Basic methods to achieve this include simple mechanical blending of rubbery inclusions with the thermosetting resin or co-polymerization of a mixture of the two.

In the composite industry, many toughened thermosetting resins (particularly those toughened with thermoplastic particles) are created *in situ* during reaction-induced phase separation. Modifiers exhibit either upper-critical-solution-temperature (UCST) behavior, i.e., miscibility increases with increasing temperature, or lower-critical-solution-temperature (LCST) behavior. When initially combined, the thermosetting resin and the modifier are miscible; however, as the reaction proceeds, the modifier becomes less miscible. Phase separation begins when the miscibility gap reaches a critical point, i.e., at or around the UCST or the LCST.

The extent of toughening of the resin highly depends on the control of the phase separation. Although reaction-induced phase separation produces dispersion of the modifier throughout the material, it makes the manufacturing critical due to the necessity of strict control over the phase separation process. Variations of the process, including variations in the modifier content, the extent of pre-reaction and variations in cure cycles, may result in a change of the morphology of the resultant material. These morphology changes directly translate into changes in the mechanical properties of the resultant material. Document EP 2 366 742 discloses a thermosetting resin composition suitable for forming a composite material that has excellent mechanical characteristics, such as wet heat resistance and toughness, and also a prepreg using the same. The thermosetting resin composition includes at least a component [A] including thermoplastic resin particles and a thermosetting resin [B]. The component [A] includes a melt blend of at least the components [A-1] and [A-2] given below. In the particles, the component [A-1] and the component [A-2] may be in a non-compatibilized state or a compatibilized state. Component [A-1]: Thermoplastic resin insoluble in the thermosetting resin [B] Component [A-2]: Thermoplastic resin soluble in the thermosetting resin [B].

Liquid resin infusion (LRI) is a process used to manufacture fiber-reinforced composite structures and components for use in a range of different industries including the aerospace, transport, electronics, building and leisure industries. The general concept in LRI technology involves infusing resins into a fiber reinforcement, fabric or a pre-shaped fibrous reinforcement ("preform") by placing the material or preform into a mold (two-component mold or single-sided mold) and then injecting resin under pressure (or ambient pressure) into the mold cavity or vacuum bag sealed single-sided mold. The resin infuses into the material or preform resulting in a fiber-reinforced composite structure. LRI technology is especially useful in manufacturing complex-shaped structures which are otherwise difficult to manufacture using conventional prepreg composite process and traditional riveted assembly. Variation of liquid resin infusion processes include, but are not limited to, Resin Infusion with Flexible Tooling (RIFT), Constant Pressure Infusion (CPI), Bulk Resin Infusion (BRI), Controlled Atmospheric Pressure Resin Infusion (CAPRI), Resin Transfer Molding (RTM), Seemann Composites Resin Infusion Molding Process (SCRIMP), Vacuum-assisted Resin Infusion (VARI) and Vacuum-assisted Resin Transfer Molding (VARTM).

Since most resin infusion systems are inherently brittle, the viscosity levels necessary to achieve the injection process often preclude the use of toughening agents. Said differently, the properties of toughness and low viscosity are mutually exclusive in conventional resin infusion systems. Addition of such tougheners to LRI systems generally results in an unacceptable increase in the viscosity of the resin and/or reduction in resistance of the cured material to solvents. In the specific case of particulate toughener, there may be additional filtering issues in the textile, i.e., the particulate may be washed away or filtered out during part manufacturing. These limitations render the addition of tougheners conventionally added in prepregs generally unsuitable in LRI applications.

In conventional prepreg applications, the toughening particles are mixed with the resin which is then applied to the fibrous reinforcement. In the context of this application, a "prepreg" is a resin-impregnated and directionally aligned fiber thin sheet, e.g., sheet, tape, tow, fabric or mat.

### SUMMARY OF INVENTION

A process for toughening a thermosetting resin, comprising: (a) combining and extruding a first polymer-based material with a second polymer-based material within a predetermined temperature range, the first material immiscible with the second material, wherein the second material is encapsulated within the first material to form a combination, the combination to form a nonwoven mat; (b) combining the combination with an engineered textile; and (c) subjecting the engineered textile to a thermosetting resin wherein the first material is at least partially soluble in the resin within a predetermined temperature range and the second material is insoluble in the resin during a cure cycle is herein disclosed

The first material is combined with the second material bya fiber extrusion process. The combination may be one of a thermoplastic/rubber combination, a thermoplastic/thermoplastic combination, a thermoplastic/clay combination or a thermoplastic/cross-linked polymer combination. The second material may be between 0.001% and 50% by weight of the first material. Additionally, the second material may be phase-separated from the first material in the combination. The second material may have the form of a particle, a micro-fiber or a fibrous network within the first material. Additionally, the second material may be one of a thermoplastic, a thermoset, a cross-linked thermoset, a rubber, a material having rubber-like characteristics, a clay or a combination thereof.

The first material may be in the form of a fiber and may be one of poly(methyl methacrylate), styrene acetonitrile, copolymers or polyethersulfone/polyetherethersulfone and an epoxy. The resin may be a polymer-based material which polymerizes to a permanently solid and infusible state upon the application of heat. More particularly, the resin may be one of a polyester, an epoxy, a polyimide, a bismaleimide, a benzoxazine, a cyanate ester, a vinyl ester, a polyisocyanurate, a phenolic resin or any combination thereof. The combination may be between 0.001 % and 50% by weight of the resin. The modified resin system may have a viscosity below 1000 cps and may have a toughness greater than 0.2 kJ/m².

A manufacturing process, comprising: (a) preparing a preform wherein the preform includes at least one non-woven mat comprising a combination of (i) a first material wherein the first material is soluble in a resin, and (ii) a second material wherein the second material is insoluble in the resin; laying the preform within a mold; (b) heating the mold to a predetermined temperature; and (c) injecting a resin, the resin to dissolve at least a portion of the first material while the second material remains intact is herein disclosed. The second material may be between 0.001% and 50% by weight of the first material and may have the form of a particle, a micro-fiber or a fibrous network within the first material. The second material may be one of a thermoplastic, a thermoset, a cross-linked thermoset, a rubber, a material having rubber-like characteristics, a clay or a combination thereof. The first material may be in the form of a fiber and may be one of poly(methyl methacrylate), styrene acetonitrile, copolymers or polyethersulfone/polyetherethersulfone and an epoxy. The resin may be one of a polyester, an epoxy, a polyimide, a bismaleimide, a benzoxazine, a cyanate ester, a vinyl ester, a polyisocyanurate, a phenolic resin or any combination thereof. The combination may be between 0.001 % and 50% by weight of the resin.

### BRIEF DESCRIPTION OF THE DRAWINGS

FIG. **1** illustrates a fibril network (agent) created from polyamide 4,6 after solubilization of polymer-based shell in the thermosetting matrix (resin upon cure).
FIG. **2** illustrates an acid-etched interlaminar region showing the location of the PA fibrils (perpendicular orientation) in the thermosetting matrix (resin upon cure).
FIG. **2A** is an exploded view of a portion of the interlaminar region shown in FIG. 2.
FIG. **3** illustrates an acid-etched interlaminar region showing the location of the PA fibrils (random orientation) in the thermosetting matrix (resin upon cure).
FIG. **4** illustrates a fibril network (agent) created from polyamide 6,6 after solubilization of polymer-based shell in the thermosetting matrix (resin upon cure).
**FIG. 5** illustrates a representative LRI approach having a fabric preform thereon.

### DETAILED DESCRIPTION

The following detailed description is of the best currently contemplated modes of carrying out the invention. The description is not to be taken in a limiting sense, but is made merely for the purpose of illustrating the general principles of the invention.

The invention uses carriers providing a primary toughening function and incorporating a secondary toughening agent therein. According to embodiments of the invention, the carrier/agent combination may be used in liquid resin infusion applications. The carrier may be any polymer-based material having a solubility characteristic in a thermosetting resin. The secondary toughening agent may be of a material such as a thermoplastic, a thermoset, a cross-linked thermoset, a rubber, a rubbery-like material or a combination thereof and may be in the form of a particle, a micro-fiber (fibril) or a fibrous network. The carrier is soluble in the resin while the secondary toughening agent is insoluble in the resin when subjected to a cure cycle.

Distribution of the secondary toughening agent throughout the thermosetting resin upon dissolution of the carrier has been experimentally shown to result in an increase in toughness of the resultant modified resin system relative to conventional resin systems. This translates into an increase in the fracture resistance of the cured material among other benefits. Moreover, composite structures incorporating a fiber-based sheet material comprised of the carrier/agent combination and manufactured by an LRI process were experimentally shown to have increased compression after impact strength and a reduction in damage area/depth among other benefits.

In the context of this application, a "carrier" is a polymer-based material (i.e., thermoplastic) having a solubility characteristic in a thermosetting resin and having a preferred fiber or fiber-like morphology in the preform prior to infusion. The carrier may act as the primary toughener in the resultant composite manufactured according to embodiments of the invention. The solubility of the carrier is the capability of the carrier to partially, substantially or completely dissolve in a given thermosetting resin. The carrier is a polymer-based fiber initially in a solid phase and adapted to undergo at least partial phase transition to a fluid phase upon contact with the thermosetting resin in which the polymer-based fiber is soluble at a temperature which is less than the temperature for substantial onset of gelling or curing of the matrix resin. In one embodiment, the carrier is a thermoplastic polymer having a melting temperature of greater than 180°C. Materials comprising the carrier include, but are not limited to, copolymers of polyethersulfone/polyetherethersulfone (PES/PEES), such as KM 180 (which has a melting temperature of greater than 200°C and is available from Cytec Industries. Inc.), and all materials specified in U.S. Pat. No. 7,192,634 Carter et al. all of which are partially, substantially or completely soluble in an epoxy resin. Alternate materials comprising the carrier include, but are not limited to, poly(methyl methacrylate) (PMMA), styrene acetonitrile (SAN) and copolymers of MMA/An/Bu/St in addition to commercial blends such as SAN/acrylate rubber (LURAN) and PPE/St/Bu (LURANYL) all of which are partially, substantially or completely soluble in a vinyl ester resin.

In the context of this application, a "secondary toughening agent" is a material having a toughening characteristic when introduced into a thermosetting resin. "Toughness" (G_{1C}) is a mechanical property and measures the resistance of a material to the propagation of a crack. The secondary toughening agent, or agent, may be of a material such as a thermoplastic, a thermoset, a cross-linked thermoset, a clay, a rubber and/or a rubbery-like material and may be in the form of a particle, a micro-fiber (fibril) or a fibrous network.

In the context of this application, a "thermosetting resin" is a resin which polymerizes to a permanently solid and infusible state upon the application of heat. Resins are used as a structural matrix material in the manufacture of adhesives and composites and are often reinforced with fibers (e.g., glass, Kevlar, boron and carbon). Examples of thermosetting resins include, but are not limited to, polyesters, epoxies, polyimides, benzoxazine, cyanate ester, vinyl ester, polyisocyanurates, phenolic resin or any combination thereof.

In the context of this application, a "preform" is a pre-shaped fibrous reinforcement, supplied without matrix, but often containing a binder to facilitate manufacture and maintain shape. A preform's fiber components are distributed or arranged, typically on a mandrel or mock-up, to approximate the contours and thickness of the finished part, saving time and labor during the molding process.

In the context of this application, a "sheet material" is an engineered textile. The sheet material may be, but is not limited to, a woven or nonwoven veil or fabric comprised of fibers or a blend of fibers. Materials comprising the sheet material include, but are not limited to, fiberglass, carbon, thermoplastic (e.g., KM 180), aramid, para-aramid (Kevlar™) and blends and/or combinations thereof.

Representative carrier/agent combinations which deliver the agent to a suitable thermosetting resin during cure and in order to create a toughened modified resin system include, but are not limited to, a thermoplastic/rubber combination, a thermoplastic/thermoplastic combination, a thermoplastic/clay combination and/or a thermoplastic/cross-linked polymer combination. In some embodiments, the carrier (i.e., thermoplastic) is at least partly soluble in the resin but the agent is insoluble in that same resin during a cure cycle. When the thermosetting resin is combined with the carrier/agent combination and subjected to a cure cycle, the carrier may partially, substantially or completely dissolve in the resin (within a given temperature range, preferably below a cure temperature) leaving behind the agent material in the form of a particle, a micro-fiber (fibril) or a fibrous network. Both the carrier and the agent function to toughen the resin system although, in some embodiments, the carrier may function as an adjuvant toughener relative to the agent, or, an aid to processing, especially during the manufacture of the carrier-agent fibers.

The carrier/agent combination is manufactured by a fiber extrusion process such as wet spinning, dry spinning, melt spinning, gel spinning or any other similar process known by one of ordinary skill in the art. In one embodiment, formation of the carrier/agent combination may be achieved by melt processing the two materials (i.e., carrier and agent) together *(in-situ* formation). The two materials (i.e., carrier and agent) are immiscible, so it is possible to create a particulate morphology of the agent within the carrier. In the embodiment in which the agent is in particle form, a diameter of the particle should be less than a diameter of the carrier fiber, preferably, at a ratio of 1:10 to 1:5 particle:fiber.

In a representative example, the carrier material is KM 180 and the agent material is Nylon 6, 6 with a weight ratio of 90:10 KM 180:Nylon 6,6. Both materials were first compounded into pellets and then extruded by a melt-blown process to produce a light 20 gsm melt-blown veil. The resultant veil comprised fine fibers having a diameter between 6 µm to 8 µm entangled together. Principal processing conditions for the manufacture of this veil were a spinneret with die holes of 0.6 mm and a temperature of 265 °C at the die head.

According to some embodiments of the invention, particle size formation takes place when the carrier and the agent are initially combined (i.e., melt processed and spun). Preformed particles/fibrils are beneficial in that the chemistry of the particles and particle size (among other factors) can be controlled during the carrier/agent combination manufacturing process which translates into a robust and reproducible process. This is contrary to the conventional approach of particle formation based on the reaction with the resin, i.e., reaction-induced phase separation, in which particle formation is much less amenable to effective control (e.g., morphology, size, etc.).

According to embodiments of the invention, the agent material may be added to the carrier material in a range of between 0.001% by weight and 50% by weight of the carrier material, preferably between 5% by weight and 30% by weight of the carrier material. According to embodiments of the invention, the carrier/agent combination material may be may be introduced into the base resin in a range of between 0.001% by weight and 50% by weight of the resin, preferably between 5% by weight and 30% by weight of the resin. Regardless of the resultant physical morphology, i.e., a particle, fibril or fiber network, the agent inclusions should have a diameter of between 0.01 microns (µ) and 100 microns once in the resin (i.e., upon cure).

In one example, a vinyl-ester thermosetting resin is modified by adding PMMA fibers (carrier) containing rubbery particles (agent) such as acrylonitrile butadiene styrene (ABS) such as NOVODUR or TERLURAN, hi-impact polystyrene (HIPS) such as LACQREN, or hi-impact polymethyl(methylacrylate) (HIPMMA) such as DIAKON in an amount of between 5% by weight and 15% by weight carrier/agent, more particularly, about 10% by weight of the overall thermosetting resin system. A typical addition of 10% by weight of these toughened polymers, i.e., the carrier/agent combination, to the resin brings up the overall toughness of the cured modified vinyl ester by 15% for the HIPS (overall rubber content of 0.5%), by 65% for the ABS (overall rubber content of 2%), 58% for the HIPMMA (overall rubber content of 4%). The increase in G_{1C} observed with the addition of 10% of PMMA fibers in vinyl ester is 95%; however, the addition of PMMA containing rubbery particles in vinyl ester is 245%.

In another example, an epoxy thermosetting resin is modified by adding PES/PEES fibers (carrier) containing epoxy particles (agent) in an amount of between 10% and 20% by weight carrier/agent. According to this embodiment, the epoxy particles are produced to the desired dimension (i.e., suitable for inclusion in a soluble fiber) in a preliminary process where the surface chemical groups are selected to optimize their adhesion performance to the thermosetting resin. In addition to an improvement in toughness, the chemical similarity of the thermosetting resin and the agent (epoxy particles) will not compromise the solvent resistance of the resin and the high glass temperature (T_{g}) of the agent.

In another example, an epoxy thermosetting resin is modified by adding PES/PEES fiber (carrier) containing polyamide material (agent) in an amount of between 10% by weight and 20% by weight carrier/agent. The polyamide may be in the form of particles, loose fibrils or interconnected fibrils (i.e., "inclusions"). The size of these inclusions is a function of manufacturing parameters such as temperature, flow and draw among others. In some embodiments, the inclusions are about one (1) micron or less. In accordance with embodiments of the invention, PES/PEES polymer has been spun with a variety of polyamides including, but not limited to, Nylon 6, Nylon 11, Nylon 12, Nylon 4,6 and Nylon 6,12.

In another example, an epoxy thermosetting resin is modified by adding PES/PEES fibers (carrier) having cross-linked thermoplastic materials (agent). In this embodiment, the agent is prepared in a separate prior step (i.e., cross-linked before spinning) and subsequently included into the thermoplastic during the fiber manufacturing (i.e., during spinning). It is anticipated that an increase in toughening may be achieved based on the extrusion rate, the temperature, the nature of the polymers or a combination thereof.

In another example, an epoxy thermosetting resin is modified by adding PES/PEES fiber (carrier) having high molecular weight poly(ether sulfone) (PES) material (agent) in a suitable ratio. Because high molecular weight PES polymer (agent) is miscible with the PES/PEES copolymer (carrier), blending with the low molecular weight copolymer PES/PEES increases its dissolution capability in an epoxy-based thermosetting resin. That is, it is anticipated that this process allows the introduction of high molecular weight polymer into the resin. It is anticipated that an increase in toughening may be achieved based on the extrusion rate, the temperature, the nature of the polymers or a combination thereof.

In an alternative embodiment, a non-woven mat such as a veil may be manufactured from the carrier material by a melt-blown process. Agent material in the form of particles, fibrils or any other suitable morphology may be subsequently scattered onto and or inside the veil. The combination may then be laminated to fix and firmly trapped the agent particles within the carrier veil fibers

According to embodiments of the invention, the carrier has a solubility characteristic within a given thermosetting resin. As the carrier dissolves within the resin during the ramp up to cure cycle, the preformed inclusions (particles, fibers, fibril agents) incorporated therein are incorporated into the resin. As a result, the rubber and/or thermoplastic inclusions are strategically distributed throughout the cured structure and provide secondary toughening thereto. Thus, resin systems suitable for LRI applications can be toughened by a combination of thermoplastic/rubber, thermoplastic/thermoplastic or thermoplastic/cross-linked polymer carrier/inclusions without compromising the overall viscosity of the resin system.

### Reference Example 1 - Vinyl ester resin system

A vinyl ester resin was toughened with a PMMA/core-shell particle carrier/agent combination. Both PMMA and PMMA containing toughening particles were extruded to produce a fine filament. Upon cure, the PMMA fibers dissolve leaving the core shell particles in the PMMA containing toughening particles to toughen the composite. Experimental tests resulted in the following data being obtained:

**TABLE 1**

| ***Sample*** | ***Ductility factor (mm)*** | ***G_{1c} (kJ*/*m2)*** | ***E (GPa)*** |
|---|---|---|---|
| Vinyl ester resin | 0.09 | 0.24 (+/- 0.06) | 3.16 |
| Vinyl ester resin modified with 10 % PMMA-fiber | 0.16 | 0.47 (+/- 0.09) | 3.12 |
| Vinyl ester resin modified with 10 % PMMA-fiber containing toughening particles | 0.27 | 0.83 (+/- 0.11) | 3.1 |

As shown, the cured plaque of the vinyl ester resin having the carrier/agent combination (10% PMMA-fiber containing toughening particles) added thereto shows a clear increase in ductility factor (0.27 mm) and neat resin fracture toughness ***G_{1c}*** (0.83±0.11 kJ/m²) according to ISO 13586 relative to the non-modified resin and the resin only modified with the PMMA-fiber. ***G_{1c}*** represents strain energy release rate, which is the energy dissipated during fracture per unit of newly created fracture surface area. The "ductility factor" is derived from the fracture toughness (K_{1C}) and the yield strength (σ_{Y}), or (K_{1C}/σ_{Y})², of a material. It is also an expression of the toughness of the material. "Fracture toughness" (K_{1C}) is a mechanical property with unit of measurement in MPa.m^{1/2} and measures the resistance of a material to the propagation of a crack. E(GPa) is the Young's modulus or the elastic modulus of the material with unit of measurement in GPa (Giga Pascal).

### Reference Example 2 - Epoxy resin system

An epoxy resin was toughened with a KM 180/nylon particle carrier/agent combination. Nylon 4,6 and KM 180 (molten 290 °C) were mixed together and extruded at temperature to produce a fine filament. The processing conditions resulted in the formation of fine nylon particles embedded (agent) into the KM 180 carrier. Experimental tests resulted in the following data being obtained:

**TABLE 2**

| ***Sample*** | ***K_{1c} (MPa.m* ^{*1*/}*²)*** | ***G_{1c} (kJ*/*m²)*** | ***E (GPa)*** |
|---|---|---|---|
| Epoxy resin | 0.59 +/- 0.04 | 0.12 +/- 0.02 | 3.41 |
| Epoxy resin modified with 10%wt KM fiber | 0.89 +/- nc | 0.31 +/- nc | nc |
| Epoxy resin modified 10%wt KM fiber (5%wt nylon particles) | 1.00 +/- 0.17 | 0.33 +/- 0.11 | 3.23 |

As shown, the cured plaque of the epoxy resin having the carrier/agent combination (10% KM 180 fiber containing nylon particles) shows an increase in ***K_{1c}*** fracture toughness (1.00±0.17) and neat resin fracture toughness ***G_{1c}*** (0.33±0.11 kJ/m²) relative to the non-modified resin and the resin only modified with the KM 180 fiber.

### Reference Example 3 - Epoxy resin system

An epoxy resin was toughened with a KM 180/nylon fibril carrier/agent combination. Nylon 6,6 and KM 180 were homogenously mixed in a 10:90 ratio and extruded into a fine filament. The processing conditions resulted in the formation of a network of Nylon 6,6 fibrils embedded (agent) into the KM 180 carrier. Experimental tests resulted in the following data being obtained:

**TABLE 3**

| ***Sample*** | ***K_{1c} (MPa.m* ^{*1*/}*²)*** | ***G_{1c} (kJ*/*m²)*** | ***E (GPa)*** |
|---|---|---|---|
| Epoxy resin | 0.59 +/- 0.04 | 0.12 +/- 0.02 | 3.41 |
| Epoxy resin modified with 10%wt KM fiber | 0.89 +/- nc | 0.31 +/- nc | Nc |
| Epoxy resin modified 10%wt KM fiber (10%wt nylon fibrils) | 1.14 +/- 0.15 | 0.43 +/- 0.13 | 3.20 |

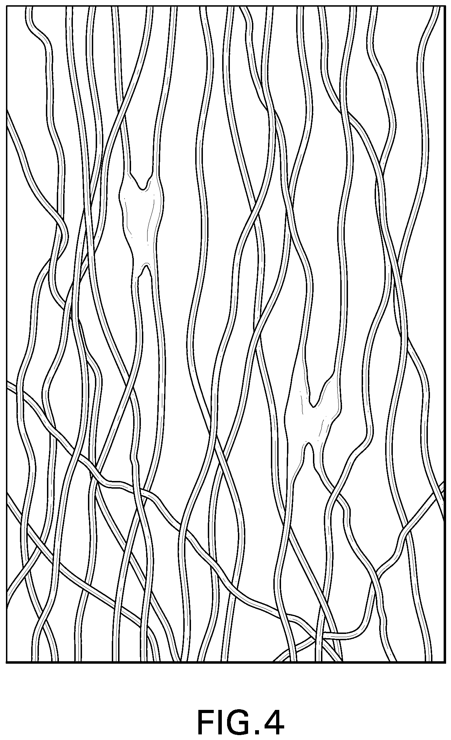

As shown, the cured plaque of the epoxy resin having the carrier/agent combination (10% KM 180 fiber containing nylon fibrils) shows an increase in fracture toughness ***K_{1c}*** (1.14 +/- 0.15 MPa.m ^{1/2}) and neat resin fracture toughness ***G_{1c}*** (0.43 +/- 0.13 kJ/m²) relative to the non-modified resin and the resin only modified with the KM 180 fiber. In this example, the carrier and the agent are both thermoplastics forming a continuous phase to create an interconnected network formed by a melt process and known as a fibril network (see FIG. 4). Independently, the agent is not soluble in the epoxy resin but the carrier is partially, substantially or completely soluble in that same resin. The fibril network forms a porous thermoplastic "skeleton" which is filled by the epoxy resin.

When introduced into a thermosetting resin, the carrier of the carrier/agent combination essentially protects and preserves the integrity of the secondary toughening agent (in the form of particles, fibrils and/or fibers). More specifically, the carrier functions to protect the agent-inclusions from premature dissolution or coalescence in the thermosetting resin during cure. Generally, the soluble carrier containing the secondary toughening agent is designed to dissolve into the uncured thermosetting resin when it reaches a specific temperature. For example, a PES/PEES soluble fiber having a secondary toughening agent dissolves at 120 °C (dissolution temperature) in an epoxy resin. The dissolution temperature of the soluble carrier is less than the curing cycle of the resin, i.e., 180 °C. In this manner, the secondary toughening agent is released *in-situ* during the cure of the material rather than prematurely.

Additionally, according to embodiments of the invention, it is anticipated that a morphology of the secondary toughening agent can be directly controlled during the encapsulation process (i.e., the combining of the carrier and agent by processes discussed previously). By selecting an agent material displaying the specific properties including, but not limited to, properties related to rheology, melting point, viscosity in the molten, it is possible to reproducibly control the formation of the agent-inclusions to a desired shape and/or size. For example, the carrier may be mixed with the agent in the melt state, the agent forming a separate phase within the carrier. The morphology of the inclusions formed during the mixing is dependent on the shear level, the nature of the two polymers, the interfacial tension of the two materials, their respective viscosity, and the presence of interfacial agents or compatibilizing agent.

Manufacturing of the carrier/agent according to the invention allows for the introduction of nano-sized agent-inclusions into the resin without using specialized techniques such as electrospinning, etc. This substantially reduces manufacturing costs and increases reproducibility from batch to batch.

An investigation was conducted to elucidate the morphology/distribution of agent fibrils upon dissolution of the carrier in a modified resin system according to an embodiment of the invention. The investigation was performed by taking images of the cured resin using a scanned electron microscope (SEM). The results of the SEM investigation suggest that the soluble fiber carrier substantially or completely dissolves within the thermosetting resin leaving behind structure which functions to toughen the cured resin.

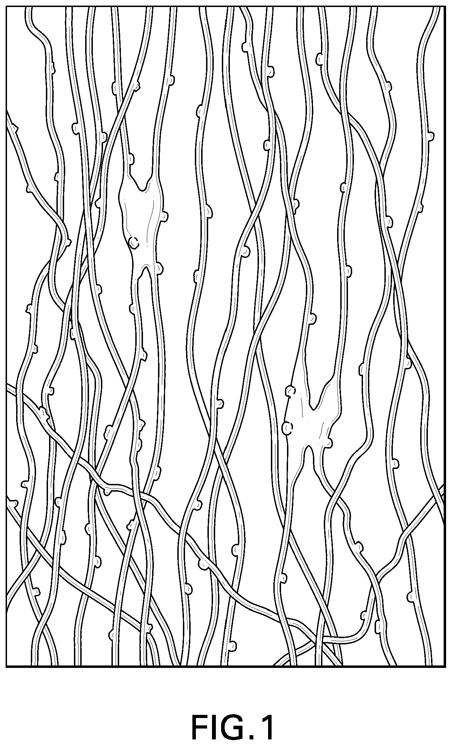

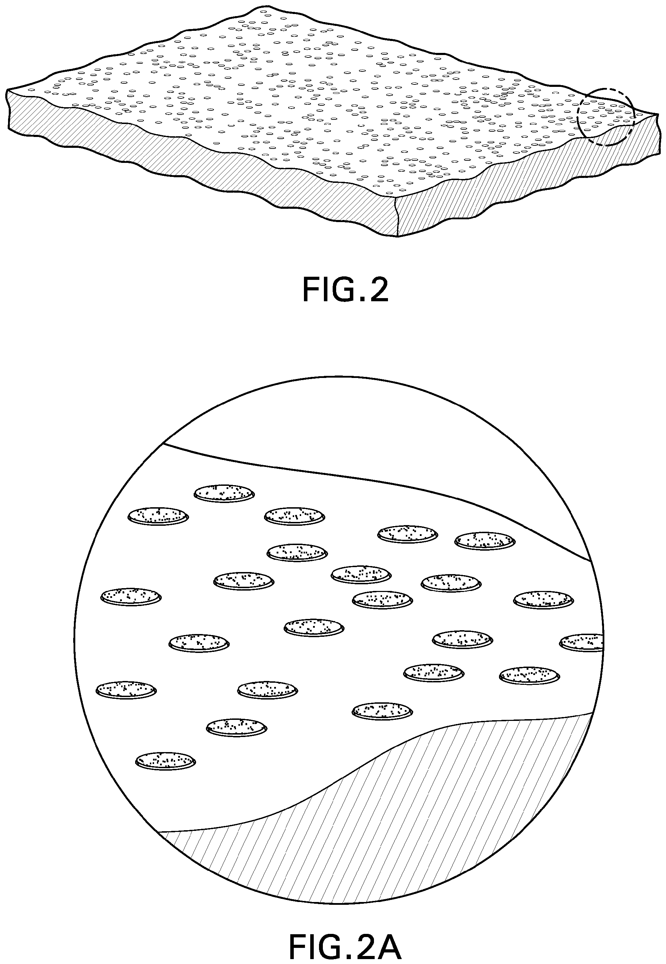

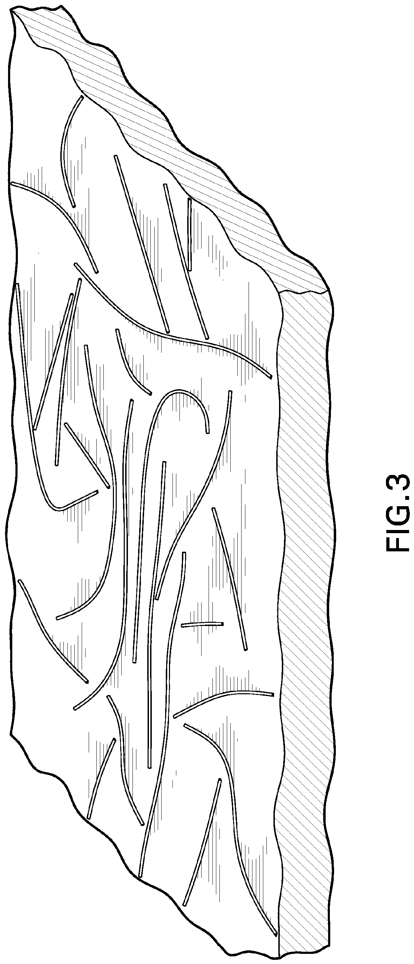

FIG. **1** illustrates a fibril network (agent) created from polyamide 4,6 after solubilization of polymer-based shell in the thermosetting matrix (resin upon cure). FIG. **2** illustrates an acid-etched interlaminar region showing the location of the PA fibrils (perpendicular orientation) in the thermosetting matrix (fibers are dissolved during the ramp-up cycle to cure temperature). FIG. **2A** is an exploded view of a portion of the interlaminar region shown in FIG. 2. FIG. **3** illustrates an acid-etched interlaminar region showing the location of the PA fibrils (random orientation) in the thermosetting matrix (resin upon cure). FIG. **4** illustrates a fibril network (agent) created from polyamide 6,6 after solubilization of polymer-based shell in the thermosetting matrix (resin upon cure).

### Example 4 - Composite with modified epoxy resin system

A composite incorporating a veil with a KM 180/nylon fibril carrier/agent combination was manufactured according to the invention. Nylon 6,6 pellets and KM 180 powder were compounded together at a ratio of 90:10 Nylon:KM 180. The resulting pellets were then melt-blown to form a 20 gsm melt-blown non-woven veil. Experimental tests resulted in the following data being obtained:

**TABLE 4**

| ***Sample*** | ***CAI (MPa)*** | ***Damage area*** | ***Damage depth*** |
|---|---|---|---|
| Ref. std interlaminar KM veil | 225 (+/-9) | 1634 (+/- 177) | 0.64 (+/- 0.1) |
| Interlaminar veil containing PA46 | 226 (+/-9) | 1290 (+/- 150) | 0.54 (+/- 0.04) |
| Interlaminar veil containing PA66 | 253 (+/-8) | 1340 (+/- 150) | 0.39 (+/- 0.03) |

The use of an interlaminar KM veil containing 10% of polyamide 6,6 (PA66) fibrils has indicated an increase in CAI (+15%), a reduction in damage area (-18%) and damaged depth (-40%) compared to the standard KM toughening veil technology. The interconnected fibrils act as nano-pins (20-50 nm), helping the material to resist to opening and crack propagation. Fibrils provide a novel way of toughening relative to a conventional inclusion toughening and z-direction reinforcements. Fibrils made of tough materials have the ability to pin opening cracks and, therefore, to improve the resistance of a structure to crack propagation.

### Processing methods using LRI

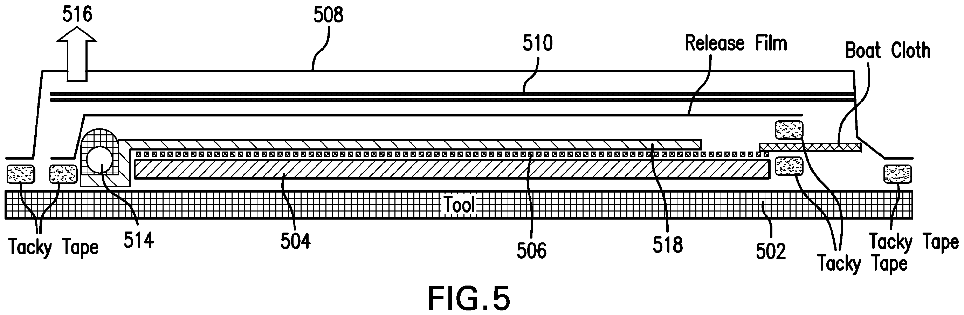

**FIG. 5** illustrates a representative LRI approach (e.g., Resin Infusion in Flexible Tooling (RIFT)) having a fabric preform thereon. As shown, the system includes a single-sided tool (i.e., mold) 502 with a fiber preform 504 laid thereon. A peel-ply layer 506 may be applied to a surface of preform 504. A vacuum bag 508 having a breather 510 therein seals preform 504 therein creating a "cavity", or area in which preform 504 resides. Before preform 504 is laid on tool 502, a release agent or gel coat may be applied to a surface of tool 502 and/or to a surface of vacuum bag 508. At one end, the "cavity" is connected to a resin inlet 514 via a resin transfer line (not shown). At another end, or at the same end, the "cavity" is connected to a vacuum system (not shown) via a vacuum evacuation line 516. Once preform 504 is positioned within tool 502 and vacuum is applied, a liquid resin 518 may be infused into the "cavity" at ambient pressure, a predetermined pressure or a gradient pressure. Liquid resin 518 may be infused at ambient temperature, a predetermined temperature or a temperature gradient. In some embodiments, tool 502 and preform 504 may be heated prior to resin injection, generally to the same temperature as that of the resin temperature injection.

According to the invention, preforms constructed from one or more layers of engineered textiles including at least one non-woven mat comprised of a carrier/agent combination are assembled in the tool to produce composite articles using LRI processing techniques and tools. The engineered textiles may include, but are not limited to, woven fabrics, multi-warp knitted fabrics, non-crimp fabrics, unidirectional fabrics, braided socks and fabrics, narrow fabrics and tapes. These fabric materials are typically formed of glass fibers, carbon fibers, aramid fibers, polyethylene fibers or mixtures thereof. When the preform is subjected to LRI, LRI-derived laminates are produced.

According to embodiments of the invention, structures manufactured with carrier/agent combinations incorporated in the pre-cure structure can be used to manufacture composite parts where large parts are produced either by infusion, injection or any resin transfer technique that is limited by the viscosity of the resin. The addition of thermoplastics to increase toughness and of which otherwise could not be introduced in some formulations is possible by carrier/agent combinations as previously described without compromising viscosity of the thermosetting resin system. In another application, the carrier/agent combinations according to embodiments of the invention can be advantageously incorporated in coating applications where the viscosity of the material is again equally important. In other applications, the carrier/agent combinations according to embodiments can be used in low-cost tooling (LCT) and engine part manufacturing processes.

According to embodiments of the invention, the carrier as previously described may be combined with other chemicals, inorganic fillers, or modifiers to be introduced into the resin system. For example, the soluble thermoplastic (i.e., carrier) could be used to introduce a catalyst for the cure of a resin, a flow modifier that would thicken the resin once it has been injected, or filler that would modify the electrical or thermal conductivity of a resin.

## Claims

1. A manufacturing process, comprising:
- preparing a preform wherein the preform includes one or more layers of engineered textiles and at least one non-woven mat comprising a combination of (i) a first material wherein the first material is soluble in a resin, and (ii) a second material wherein the second material is insoluble in the resin, said preform being a pre-shaped fibrous reinforcement, supplied without matrix, but often containing a binder to facilitate manufacture and maintain shape, and said preform being manufactured by a process comprising combining and extruding a first polymer-based material with a second polymer-based material by a fiber extrusion process within a predetermined temperature range, the first material immiscible with the second material, wherein the second material is encapsulated within the first material to form a combination, the combination to form a nonwoven mat; and combining the combination with an engineered textile, wherein the first material is at least partially soluble in the thermosetting resin within a predetermined temperature range and the second material is insoluble in the thermosetting resin during a cure cycle;
- laying the preform within a mold;
- heating the mold to a predetermined temperature; and
- injecting a thermosetting resin, the thermosetting resin to dissolve at least a portion of the first material while the second material remains intact.

2. The manufacturing process of claim 1 wherein the second material has the form of a particle, a micro-fiber or a fibrous network within the first material.

3. The manufacturing process of claim 2 wherein the first material is one of poly(methyl methacrylate), styrene acetonitrile, copolymers of polyethersulfone/polyetherethersulfone and an epoxy, the second material is one of a thermoplastic, a thermoset, a cross-linked thermoset, a rubber, a material having rubber-like characteristics, a clay or a combination thereof, and the resin is one of a polyester, an epoxy, a polyimide, a bismaleimide, a benzoxazine, a cyanate ester, a vinyl ester, a polyisocyanurate, a phenolic resin or any combination thereof.

## Patentansprüche

1. Herstellungsverfahren, umfassend:
- Herstellen einer Vorform, wobei die Vorform eine oder mehrere Schichten von modifiziertem Textilmaterial und wenigstens eine Vliesmatte umfassend eine Kombination von (i) einem ersten Material, wobei das erste Material in einem Harz löslich ist, und (ii) einem zweiten Material, wobei das zweite Material in dem Harz unlöslich ist, umfasst, wobei die Vorform eine vorgeformte Faserverstärkung ist, die ohne Matrix bereitgestellt ist, aber oft ein Bindemittel enthält, um die Herstellung und die Formbewahrung zu erleichtern, und die Vorform durch ein Verfahren hergestellt ist, das Kombinieren und Extrudieren eines ersten Materials auf Polymerbasis mit einem zweiten Material auf Polymerbasis durch ein Faserextrusionsverfahren in einem vorbestimmten Temperaturbereich umfasst, wobei das erste Material mit dem zweiten Material unmischbar ist, wobei das zweite Material innerhalb des ersten Materials verkapselt ist, um eine Kombination, die Kombination zum Bilden einer Vliesmatte, zu bilden; und Kombinieren der Kombination mit einem modifizierten Textilmaterial, wobei das erste Material in einem vorbestimmten Temperaturbereich wenigstens teilweise in dem wärmehärtenden Harz löslich ist und das zweite Material während eines Härtungszyklus in dem wärmehärtenden Harz unlöslich ist;
- Einlegen der Vorform in ein Formwerkzeug;
- Erhitzen des Formwerkzeugs auf eine vorbestimmte Temperatur; und
- Einspritzen eines wärmehärtenden Harzes, wobei das wärmehärtende Harz wenigstens einen Teil des ersten Materials löst, während das zweite Material intakt bleibt.

2. Herstellungsverfahren gemäß Anspruch 1, wobei das zweite Material die Form eines Partikels, einer Mikrofaser oder eines Fasernetzwerks innerhalb des ersten Materials aufweist.

3. Herstellungsverfahren gemäß Anspruch 2, wobei das erste Material eines von Poly(methylmethacrylat), Styrol-Acetonitril, Copolymeren von Polyethersulfon/Polyetherethersulfon und einem Epoxy ist, und das zweite Material eines von einem Thermoplast, einem Duroplast, einem vernetzten Duroplast, einem Kautschuk, einem Material mit kautschukartigen Eigenschaften, einem Ton oder einer Kombination davon ist, und das Harz eines von einem Polyester, einem Epoxy, einem Polyimid, einem Bismaleimid, einem Benzoxazin, einem Cyanatester, einem Vinylester, einem Polyisocyanurat, einem Phenolharz oder einer Kombination davon ist.

## Revendications

1. Procédé de fabrication, comprenant :
- la préparation d'une préforme, la préforme contenant une ou plusieurs couches de textiles techniques et au moins un mat non tissé comprenant une combinaison de (i) un premier matériau, le premier matériau étant soluble dans une résine, et (ii) un deuxième matériau, le deuxième matériau étant insoluble dans la résine, ladite préforme étant un renfort fibreux préformé, fourni sans matrice, mais contenant souvent un liant pour faciliter la fabrication et maintenir la forme, et ladite préforme étant fabriquée par un procédé comprenant la combinaison et l'extrusion d'un premier matériau à base de polymère avec un deuxième matériau à base de polymère par un procédé d'extrusion de fibres dans une plage de températures prédéterminée, le premier matériau étant immiscible avec le deuxième matériau, le deuxième matériau étant encapsulé à l'intérieur du premier matériau pour former une combinaison, la combinaison servant à former un mat non tissé ; et l'association de la combinaison avec un textile technique, le premier matériau étant au moins partiellement soluble dans la résine thermodurcissable dans une plage de températures prédéterminée et le deuxième matériau étant insoluble dans la résine thermodurcissable durant un cycle de durcissement ;
- la pose de la préforme dans un moule ;
- le chauffage du moule à une température prédéterminée ; et
- l'injection d'une résine thermodurcissable, la résine thermodurcissable servant à dissoudre au moins une partie du premier matériau tandis que le deuxième matériau reste intact.

2. Procédé de fabrication selon la revendication 1, dans lequel le deuxième matériau est sous la forme d'une particule, d'une microfibre ou d'un réseau fibreux à l'intérieur du premier matériau.

3. Procédé de fabrication selon la revendication 2, dans lequel le premier matériau est l'un du poly(méthacrylate de méthyle), du styrène-acétonitrile, de copolymères de polyéthersulfone/polyétheréthersulfone et d'un époxyde, le deuxième matériau est l'un d'un thermoplastique, d'un composé thermodurcissable, d'un composé thermodurcissable réticulé, d'un caoutchouc, d'un matériau ayant des caractéristiques similaires à celles du caoutchouc, d'une argile, ou d'une combinaison de ceux-ci, et la résine est l'un d'un polyester, d'un époxyde, d'un polyimide, d'un bismaléimide, d'une benzoxazine, d'un cyanate ester, d'un ester vinylique, d'un polyisocyanurate, d'une résine phénolique, ou de n'importe quelle combinaison de ceux-ci.
